# EUROPÄISCHE PATENTSCHRIFT

(11) **EP 1 419 201 B1**
(45) Veröffentlichungstag und Bekanntmachung des Hinweises auf die Patenterteilung: **03.04.2013**
(21) Anmeldenummer: 02758441.6
(22) Anmeldetag: 07.08.2002
(51) Int. Cl.: C09C 3/10, C09D 201/00, C09D 125/06, C08K 9/08

(54) **VERFAHREN ZUR BEHANDLUNG VON OBERFLÄCHEN VON SUBSTRATEN**
METHOD FOR TREATING THE SURFACES OF SUBSTRATES
PROCEDE DE TRAITEMENT DE SURFACES DE SUBSTRATS

(30) Priorität: 09.08.2001 DE 10140246
(43) Veröffentlichungstag der Anmeldung: 19.05.2004
(73) Patentinhaber: Fraunhofer-Gesellschaft zur Förderung der angewandten Forschung e.V., 80686 München (DE)
(72) Erfinder: SCHAUER, Thadeus, 75382 Neuhengstett (DE); ENTENMANN, Marc, 70734 Fellbach (DE); EISENBACH, Claus, D., 71069 Sindelfingen (DE); ÖCHSNER, Waldemar, Ph., 71634 Ludwigsburg (DE)
(74) Vertreter: Hoeger, Stellrecht & Partner Patentanwälte
(86) Internationale Anmeldenummer: PCT/EP2002/008847
(87) Internationale Veröffentlichungsnummer: WO 2003/014229

(56) Entgegenhaltungen:
- EP-A- 0 365 111
- WO-A-97/13789
- GB-A- 1 049 772
- US-A- 4 900 791

## Beschreibung

Die Erfindung betrifft ein Verfahren zur Behandlung von Substraten, insbesondere zur Hydrophobierung oder Hydrophilierung von dessen Oberflächen.

Vielerlei Oberflächen, insbesondere auch metallische Oberflächen, neigen zur Korrosion in feuchter Umgebung und müssen deshalb geschützt werden.

Gebräuchlich zur Passivierung von Oberflächen gegen Korrosionsangriffe sind Oxidationsbehandlungen zur Ausbildung von Oxidschichten an Oberflächen, eine Phosphatierungs- oder auch Chromatierungsbehandlung, wobei hier sogenannte Konversionsschichten erzeugt werden, die im letzteren Falle aus toxischen Chromaten bestehen.

Im Falle von Partikeln wie sie beispielsweise bei Metallicpigmenten in Form von Aluminiumflakes vorkommen, ist eine ausreichend dichte Beschichtung mit den herkömmlichen Verfahren schwierig, insbesondere auch deshalb, weil der thermische Ausdehnungskoeffizient des Metalls, d.h. hier Aluminium, von dem Ausdehnungskoeffizienten von Aluminiumoxid verschieden ist, so dass bei thermischer Beanspruchung die Schutzschicht zur Rissbildung neigt.

Bei ungenügendem Schutz der Oberflächen bilden sich nach einer Lackierung derselben Blasen und Korrosionsprodukte in feuchter Umgebung, d.h. hier löst sich die Lackschicht von dem darunter liegenden korrodierenden Untergrund ab.

Aufgabe der vorliegenden Erfindung ist es, ein Verfahren zu schaffen, mit dem Oberflächen vor einem Korrosionsangriff geschützt werden können und das insbesondere die bisherigen Verfahren vermeidet und darüber hinaus einfach anwendbar ist.

Ferner soll eine organische Schicht geschaffen werden, die eine haftvermittelnde und kompatibilisierende Funktion gegenüber weiteren organischen Schichten übernehmen kann.

Eine weitere Aufgabe der Erfindung ist die Einstellung der hydrophoben/ hydrophilen Eigenschaften der zu bedeckenden Oberfläche.

Das erfindungsgemäße Verfahren löst die eingangs genannte Aufgabe, indem das Substrat mit einer Lösung eines Polymeren in Kontakt gebracht wird, wobei das Polymere UCST-Eigenschaften aufweist und durch Erniedrigung der Temperatur der Polymerlösung auf der Oberfläche des Substrats als eine Schicht abgeschieden wird.

Die Beschichtung des Substrats kann partiell erfolgen, insbesondere in Form von Polymerinseln; die Beschichtung kann aber auch ganzflächig als geschlossene Schicht ausgebildet sein.

Das erfindungsgemäße Verfahren weist größere Vorzüge bei der Stabilisierung gegen Flockulation, insbesondere auch in unpolaren Medien, von Partikeln auf. Polymere mit UCST-Eigenschaften (im Folgenden kurz UCST-Polymere genannt), scheiden sich aus einer Polymerlösung ab, wenn die hierfür kritische Temperatur (UCST = Upper Critical Solution Temperature) unterschritten wird. Diese Temperatur hängt von dem jeweils mit dem Polymer verwendeten Lösungsmittel ab.

Eine Beschreibung von UCST-Polymeren und deren Eigenschaften findet sich in der Monographie "Polymere" von Haus-Georg-Elias, Hüthig und Wepf-Verlag, Zug, 1996, Seiten 183 - 184.

Das Verhalten der UCST-Polymeren bei Temperaturerniedrigung einer Polymerlösung ist von dem üblichen Effekt des Ausfällens von in einer gesättigten Lösung vorliegenden Substanzen verschieden, da durch die Temperaturemiedrigung nicht graduell die Löslichkeit des gelösten Stoffes verringert wird, sondern in einem relativ engen Temperaturbereich die Löslichkeit der gelösten Substanz, nämlich dem UCST-Polymeren, drastisch erniedrigt wird.

Diese Eigenschaft wird bei der vorliegenden Erfindung ausgenutzt, um eine Ablagerung bzw. ein Abscheiden des UCST-Polymeren auf der Oberfläche zu erreichen.

Bevorzugte UCST-Polymere gemäß der vorliegenden Erfindung werden ausgewählt aus Polystyrolen, Polyvinylalkoholen, Polyvinylpyrazolen, Polyethylenoxiden, Polyacrylsäuren sowie deren Derivate.

Als Lösemittel kommt in der Regel ein organisches Lösemittel zum Einsatz.

Bevorzugt wird die Temperatur der Lösung des UCST-Polymeren in dem Lösemittel bei dem in Kontakt bringen mit der Substratoberfläche größer gewählt als die UCST, und dann die Temperatur der Lösung auf einen Wert im Bereich der UCST oder darunter abgesenkt.

Nachdem die UCST bzw. die damit verbundenen Phänomene der Ablagerung bzw. der Änderung der Löslichkeit der gelösten Polymere eine gewisse Bandbreite aufweisein, ist es möglich die Abscheidung des UCST-Polymeren in einem Bereich vorzunehmen, der ca. UCST + 5 °C bis UCST - 30°C reicht. Arbeitet man in diesem Temperaturbereich, so läßt sich die erzielbare Schichtdicke, insbesondere auch die Dichte der Beschichtung auf der Substratoberfläche, einfach und günstig beeinflussen.

Besonders bevorzugt reicht der Temperaturbereich, in dem das Abscheiden des UCST-Polymeren auf der Oberfläche des Substrats vorgenommen wird, von T = UCST bis T = UCST - 10 °C.

In diesem Temperaturbereich werden besonders dichte Schichten des UCST-Polymeren auf der Oberfläche des Substrats erhalten. Bevorzugt wird die Temperatur auf dem gewählten niedrigen Niveau, bei dem das UCST-Polymere abgeschieden wird, so lange gehalten, bis eine im Wesentlichen vollständige Abscheidung des UCST-Polymeren aus der Lösung auf der Substratoberfläche erhalten wird.

Nach dem Abscheiden des UCST-Polymeren auf der Substratoberfläche kann die so beschichtete Substratoberfläche mit einem Lösemittel für das UCST-Polymere bei einer Temperatur im Bereich von T = UCST - 10 °C oder darunter gewaschen werden. Bei dieser Temperatureinstellung für das Lösemittel können nur lose, an der Oberfläche abgelagerte Polymermoleküle entfernt werden, so dass nur die direkt auf der Oberfläche abgelagerte Schicht auf der Substratoberfläche verbleibt. Dies vermeidet, dass in einem späteren Behandlungsschritt der beschichteten Substratoberfläche UCST-Polymere unerwünscht abgelöst werden und gegebenenfalls zu Störungen in der Folgebehandlung führen.

Mit dem erfindungsgemäßen Verfahren läßt sich eine gezielte Hydrophobierung als auch Hydrophilierung der Oberflächen von Substraten durchführen, wobei der Grad der Hydrophobierung/Hydrophilierung beispielsweise bereits durch die Auswahl des entsprechenden UCST-Polymeren in gewissen Grenzen vorgegeben werden kann.

Der selbe Effekt, den man mit dem Waschen erzielt, kann auch dadurch erzielt werden, dass das Substrat mit der Lösung bzw. mit dem Lösemittel nach erfolgter Abscheidung des UCST-Polymeren kurzzeitig, beispielsweise für ca. 5 Minuten, auf eine Temperatur oberhalb der UCST gehalten wird bzw. oberhalb der Temperatur, die für die Ablagerung verwendet wurde, und dass dann ein Trennen von Substrat und Lösung erfolgt. Dies hat wie der Waschvorgang zur Folge, dass nur locker an der Substratoberfläche bzw. auf der eigentlichen dichten UCST-Polymerschicht angelagerte Polymermoleküle von dem Lösemittel aufgenommen und abtransportiert werden.

Die Temperaturerhöhung, die hier vorzugsweise vorgenommen wird, liegt im Bereich bis zu 5 Grad oberhalb der UCST bzw. der für das Abscheiden verwendeten Temperatur.

Um eine besonders sichere Beschichtung zu erhalten, die auch eine besondere Freiheit in den Nachfolgeprozessen, beispielsweise bei der Wahl des Lösemittels, erlaubt, kann vorgesehen werden, dass nach erfolgter Abscheidung des UCST-Polymeren auf der Substratoberfläche, dieses mittels einer chemischen Reaktion immobilisiert wird. Hierbei bieten sich verschiedene Reaktionen an, die je nach dem verwendeten UCST-Polymeren ausgewählt werden.

Alternativ kann das Polymer mit Ankergruppen versehen sein, die für eine Immobilisierung des Polymeren sorgen. Beispiele für Ankergruppen sind: Carboxyl-, Amino-, Hydroxyl- und Mercaptogruppen.

Ein besonders bevorzugtes UCST-Polymer für die vorliegende Erfindung ist das Polystyrol. Modifikationen des Polystyrols in abgeschiedener Form, die gleichzeitig auch zu einer Immobilisierung bzw. Vernetzung des Polystyrols führen können, sind aus der Literatur von R. H. Boundy, R. F. Beuer "Styrene - Its Polymers, Copolymers and Derivatives" Reinhold Publishers Corporation, New York 1952, bekannt.

Wird eine Immobilisierung der UCST-Polymerbeschichtung auf der Substratoberfläche vorgenommen, wird der Schritt des Waschens der Substratoberfläche vorzugsweise nach der Immobilisierung durchgeführt.

Für die Immobilisierung bietet sich insbesondere das folgende Verfahren an:
- Abscheidung eines mit Doppelbindungen modifizierten UCST-Polymeren und nachfolgende radikalische Vernetzung (initiiert durch UV-Licht oder Radikalbildner).

Darüber hinaus läßt sich das UCST-Polymere vor der Ablagerung oder auch danach modifizieren, um die Hydrophobie/Hydrophilie der Beschichtung auf der Oberfläche zu beeinflussen und so zu einer ganz gezielten Hydrophobierung/Hydrophilierung der Oberfläche zu kommen. Dies bietet über die Wahl des UCST-Polymeren hinaus noch die Möglichkeit, den Hydrophobierungs-/Hydrophilierungseffekt weiter zu modifizieren.

Für die Modifizierung des UCST-Polymeren zur Veränderung der Hydrophobierung können folgende Verfahren eingesetzt werden:
- Abscheidung von polar/ionisch modifizierten UCST-Polymeren (z.B. mit Sulfonsäuregruppen oder mit PEO modifiziertem Styrol) oder von unpolar modifizierten UCST-Polymeren (z.B. Polystyrolcopolymer mit Butadien);
- Modifizierung nach der Abscheidung (im Falle von Polystyrol durch Friedel-Crafts-Acylierung/-Alkylierung).

Bevorzugt wird das UCST-Polymere nach dessen Ablagerung auf der Oberfläche modifiziert und gleichzeitig immobilisiert.

Da die erfindungsgemäße Beschichtung auf der Oberfläche des Substrats eine gewisse Elastizität aufweist, kann diese Unterschiede im thermischen Ausdehnungskoeffizienten gegenüber der darunter liegenden Substratoberfläche problemlos ausgleichen. Eine Rissbildung in der Beschichtung, wie dies beispielsweise bei schützenden spröden Oxidschichten aus Aluminiumoxid oder Siliziumdioxid oder auch Chromaten beobachtet wird, wird mit dem vorliegenden Verfahren und den UCST-Polymerbeschichtungen sicher vermieden.

Gemäß dem vorliegenden Verfahren werden Partikel als auch flächige Substrate mit einer Oberflächenbeschichtung ausgerüstet.

Im Falle, dass als Substrat ein partikelförmiges Substrat verwendet wird, wird das UCST-Polymere bevorzugt mit einer Molmasse von 1.000 bis 50.000 g/mol verwendet.

Im Falle, dass Substrate als flächige Substrate zur Anwendung kommen, wird das UCST-Polymere ausgewählt mit einer Molmasse von 1.000 bis 500.000 g/mol.

Bei den partikelförmigen Substraten bietet sich eine Vielzahl von Substraten an, beispielsweise Pigmente, Füllstoffe, Fasern, Nanopartikel, Partikel aus kolloidalen oder micellaren Systemen oder auch die eingangs bereits angesprochenen plättchenförmigen Partikel, die in Metalliclacken zum Einsatz kommen.

Das erfindungsgemäße Verfahren bietet sich insbesondere an, um sehr dünne Schichten; sogenannte Nanoschichten auf einer Oberfläche aufzubringen, wobei diese Nanoschichten trotz ihrer geringen Schichtdicke eine dichte Belegung der Oberfläche bieten können.

Die Erfindung betrifft weiterhin eine Oberfläche mit einer UCST-Polymerbeschichtung, welche hergestellt ist nach einem der vorstehend diskutierten erfindungsgemäßen Verfahren.

Hierbei sind insbesondere Oberflächen mit einer Beschichtung mit einer sogenannten Nanoschicht von Bedeutung und insbesondere auch Oberflächen, die metallische Oberflächen sind.

Schließlich werden die UCST-Polymere so ausgewählt, dass deren UCST oberhalb der Temperatur liegt, bei der die beschichteten Substrate zum Einsatz gelangen. Vorzugsweise liegt die UCST der Polymeren 10 °C, weiter bevorzugt 15 °C oberhalb der Einsatztemperatur der Substrate. Mit den vorbeschriebenen Maßnahmen wird eine thermodynamische Stabilisierung der auf der Substratoberfläche abgeschiedenen UCST-Polymere erreicht.

Generell gesprochen lässt sich die Schichtdicke der auf der Oberfläche abgeschiedenen Schicht beeinflussen, indem
a) das erfindungsgemäße Verfahren mehrfach hintereinander durchgeführt wird;
b) die Temperatur entsprechend tief unter die UCST abgekühlt wird; und/oder
c) das UCST- Polymer in unterschiedlichen Konzentrationen in Lösung vorgelegt wird.

Besondere Bedeutung gewinnt die vorliegende Erfindung bei der Oberflächenbeschichtung von Stahl, verzinktem Stahl, Aluminium oder Aluminiumlegierungen.

Das erfindungsgemäße Verfahren kann mehrfach wiederholt werden, um damit die Schichtdicke der Abscheidung auf der Oberfläche zu erhöhen. Insbesondere bei flächigen Substraten, bei denen in der Tendenz höhere Molmassen bei den UCST-Polymeren günstig sind, erhält man pro Verfahrensschritt oder Ablagerungsschritt eine größere Schichtdicke.

Dies und weitere Vorteile der Erfindung werden im folgenden anhand der Beispiele und Figuren noch näher erläutert. Es zeigen im Einzelnen:
- Figur 1:: den Randwinkel von Wasser an einer Oberfläche, die erfindungsgemäß mit unterschiedlichen modifizierten UCST-Polymeren beschichtet ist; und
- Figur 2:: Ergebnisse eines Korrosionsfestigkeitstests von erfindungsgemäß beschichteten Oberflächen.

Zunächst sei die Erfindung anhand eines Beispiels beschrieben, bei dem ein partikelförmiges Substrat, nämlich ein Metallicpigment zum Einsatz kommt. Die Beschichtung von Metallicpigmentpartikeln gemäß dem erfindungsgemäßen Verfahren führt zu einer Hydrophobierung der Oberfläche und setzt damit die Wasseraufnahme von Lacken, die solche Pigmentpartikel beinhalten, herab. Dies führt zu einer Verminderung der Blasenbildung in der Lackschicht und zu einer erhöhten Korrosionsbeständigkeit und Resistenz der belegten Metallicpigmente gegenüber Umwelteinflüssen (Saurer Regen). Bevorzugt werden in diesem Zusammenhang Schichtdicken im Bereich von 5 bis 100 nm.

### Beispiel 1:

12 g Pigment (Big Resist E900, Fa. Eckart) werden bei 800 U/min für die Dauer von 30 min in 40 ml Decan / Cyclohexanmischung 3:1 Volumenverhältnis unter Thermostatisierung auf 23 °C dispergiert. Anschließend wird in einen Rundkolben mit Rückflusskühler überführt und auf 65 °C erhitzt. Es werden 5 ml einer 33 Gew.%igen Lösung (Raumtemperatur) eines acryl-endgruppenmodifizierten Polystyrolpolymeren (Molmasse 12 000 g/mol, Fa. Aldrich, UCST: ca. 50-55 °C) in Cyclohexan zugegeben, die hierbei entstehende Mischung auf 35 °C abgekühlt und nach 10 Minuten wiederum auf 65 °C erwärmt. Wiederum werden 2,2 ml einer 33 Gew.%igen Lösung des Polystyrolderivates zugegeben (Raumtemperatur) und das Ganze auf 35 °C abgekühlt. Danach wird auf 50 °C erwärmt, abfiltriert und bei Raumtemperatur getrocknet.

### Herstellung der pigmentierten Lacke zur Durchführung des Kondenswassertests nach DIN 50 017:

### Beispiel 2 und Vergleichsbeispiel 1:

Je 1,4 g behandeltes Metallicpigment aus Bsp. 1 und unbehandeltes Pigment, (Big Resist E900, Fa. Eckart) werden jeweils in 25 ml eines pysikalisch trocknenden Einkomponenten-Polyester-/Polyacryl-Mischlack bei 800 U/min für 15 min bei 23 °C dispergiert und auf Glasplatten unter Verwendung einer Rakel mit einer Nassschichtdicke von 200 µm aufgezogen. Es wird 12 Std. bei Raumtemperatur abgelüftet und für 30 min. bei 80 °C die Lackschichten getrocknet.

Nachweis der verminderten Wasseraufnahme durch Ausführung eines Kondenswassertestes nach DIN 50 017:

Nach dem Abkühlen auf Raumtemperatur wird der Kondenswassertest nach DIN 50 017 bei 40 °C durchgeführt. Nach 94 Std. Belastung zeigte sich bei der Lackschicht, welche unter Verwendung des kommerziellen Pigmentes hergestellt wurde (Vergleichsbeispiel 1), die doppelte Menge Blasen als bei der Lackschicht, die unter Verwendung des mit Polystyrol nach dem obigen Verfahren nachbehandelten Pigmentes hergestellt wurde (Beispiel 2).

In einem weiteren Beispiel wurde ein flächiges Substrat in Form eines Aluminiumbleches mit einer UCST-Polymerschicht beschichtet und die Beschichtung nachfolgend modifiziert, um die Hydrophobie der Oberflächenschicht einzustellen:

### Beispiel 3:

Eine Aluminiumplatte (Al 99,5; Größe: 50 x 20 x 1,5 mm) wird in ein 50 ml Schraubdeckelglas mit 50 ml einer Chlorbenzol / Decan - Mischung 1:4 gegeben. Es werden 0,5 ml einer 33%igen Lösung eines acryl-endgruppenmodifizierten Polystyrolpolymeren (Molmasse 12 000 g/mol, Fa. Aldrich; UCST ca. 50 bis 55 °C) in Cyclohexan hinzugefügt und erwärmt, bis das Polymere gelöst ist (ca. 50 - 55°C). Es wird auf 25 °C abgekühlt und nach 10 min wieder auf 50 °C erwärmt. Nach dem erneuten Abkühlen auf 25 °C wird die Aluminiumplatte entnommen.

Zur zusätzlichen Modifizierung der abgeschiedenen Schichten wird jeweils eine gemäß Beispiel 3 erhaltene Probe in entsprechende Reaktionsmischungen für die Dauer von 2 Std. bei 23 °C eingetaucht und danach mehrmals mit destilliertem Wasser abgespült und für die Dauer von 10 min bei 80 °C im Umluftofen getrocknet.

### Modifizierung 1:

Eintauchen in eine Reaktionsmischung, bestehend aus einem 50 ml Chlorbenzol /Decan - Gemisch 1:4, 5 ml einer ca. 2 %igen Lösung von wasserfreiem AlCl₃ in Chlorbenzol und 1 ml Propionsäurechlorid.

### Modifizierung 2:

Eintauchen in eine Reaktionsmischung, bestehend aus einem 50 ml Chlorbenzol /Decan - Gemisch 1:4, 5 ml einer ca. 2 %igen Lösung von wasserfreiem AlCl₃ in Chlorbenzol und 1 ml Crotonsäurechlorid.

### Modifizierung 3:

Eintauchen in eine Reaktionsmischung, bestehend aus einem 50 ml Chlorbenzol /Decan - Gemisch 1:4, 5 ml einer ca. 2 %igen Lösung von wasserfreiem AlCl₃ in Chlorbenzol und 1 ml Fumarsäurechlorid.

### Modifizierung 4:

Eintauchen in eine Reaktionsmischung, bestehend aus einem 50 ml Chlorbenzol /Decan - Gemisch 1:4, 5 ml einer ca. 2 %igen Lösung von wasserfreiem AlCl₃ in Chlorbenzol und 1 ml Acetylchlorid.

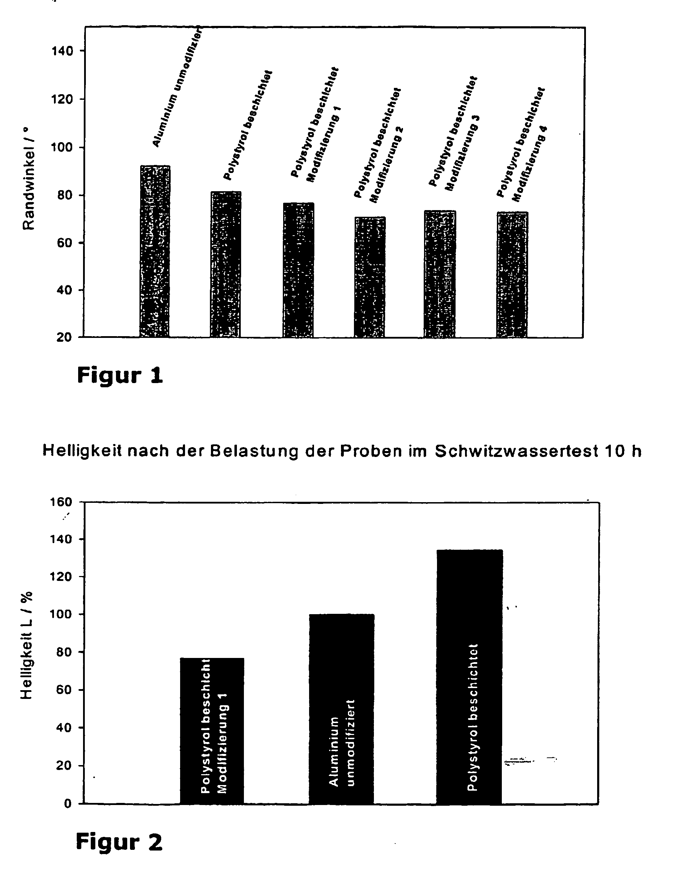

Bei entsprechender Modifizierung des Polystyrols und Durchführung einer Vernetzungsreaktion kann das Polymere irreversibel immobilisiert werden (Einzelheiten zu den Modifizierungsreaktionen sind der Literaturstelle R. H. Boundy, Styrene - Its Polymers, Copolymers and Derivatives, Reinhold Publishers Corporation, New York, 1952, zu entnehmen). Eine so immobilisierte Polymerschicht kann durch Abspülen mit Cyclohexan von nichtvernetztem Polymer leicht gereinigt werden. Die Randwinkel von Wasser von den erhaltenen Aluminiumproben aus Beispiel 3 sind in Tabelle 1 aufgelistet und in Figur 1 graphisch zusammengefaßt. Wie aus Figur 1 zu entnehmen ist, kann der Kontaktwinkel von Wasser nach dem oben angeführten Verfahren im Bereich von ca. 75 ° bis 85 ° variiert werden.

**Tabelle 1**

| **Probe** | **Kontaktwinkel von Wasser** [ ° ] |
|---|---|
| Aluminium unmodifiziert | 92.2 |
| Polystyrol beschichtet | 81.5 |
| Polystyrol beschichtet, Modifizierung 1 | 76.8 |
| Polystyrol beschichtet, Modifizierung 2 | 70.9 |
| Polystyrol beschichtet, Modifizierung 3 | 73.6 |
| Polystyrol beschichtet, Modifizierung 4 | 73.2 |

Die erhöhte Resistenz gegenüber Korrosion der mit einer relativ hydrophoben Polystyrolschicht belegten Aluminiumprobe im Vergleich zu einer nichtbelegten Aluminiumprobe, bzw. einer polystyrolbeschichteten Aluminiumprobe, bei der eine zusätzliche Hydrophilierung nach Methode Modifizierung 1 durchgeführt wurde, wurde anhand eines Kondenswassertestes (DIN 50 017, Dauer 10 Std.) überprüft und durch Anwendung einer Helligkeitsmessung quantifiziert, wobei jeweils auf die unbeschichtete Probe bezogen wurde. Die Ergebnisse sind in Figur 2 graphisch dargestellt.

Ein höherer Helligkeitswert kennzeichnet eine geringere Korrosionsneigung der Probe. Die Ergebnisse aus Figur 2 zeigen somit eine sehr gute Übereinstimmung mit den Ergebnissen der Randwinkelmessungen (Figur 1). Ein größerer Randwinkel für das nur mit Polystyrol nachbehandelte Aluminium weist auf eine größere Hydrophobie der Beschichtung hin, dementsprechend sind die Korrosionseffekte geringer als bei einer zusätzlich hydrophil modifizierenden Polystyrolnachbehandlung (Modifizierung 1).

## Patentansprüche

1. Verfahren zur Behandlung von Oberflächen von Substraten, **dadurch gekennzeichnet, dass** das Substrat mit einer Lösung eines Polymeren in Kontakt gebracht wird, wobei das Polymere UCST-Eigenschaften aufweist und durch Erniedrigung der Temperatur der Polymerlösung auf der Oberfläche des Substrats als eine Schicht abgeschieden wird.

2. Verfahren nach Anspruch 1, **dadurch gekennzeichnet, dass** das Polymere ausgewählt ist aus Polystyrolen, Polyvinylalkoholen, Polyvinylpyrazolen, Polyethylenoxiden, Polyacrylsäuren und deren Derivaten.

3. Verfahren nach Anspruch 1 oder 2, **dadurch gekennzeichnet, dass** die Lösung ein organisches Lösemittel umfasst.

4. Verfahren nach einem der Ansprüche 1 bis 3, **dadurch gekennzeichnet, dass** die Temperatur der Lösung bei dem Inkontaktbringen mit der Substratoberfläche größer ist als die UCST-Temperatur des Polymeren in dem Lösemittel und dass dann die Temperatur der Lösung auf einen Wert im Bereich der UCST oder darunter abgesenkt wird.

5. Verfahren nach einem der Ansprüche 1 bis 3, **dadurch gekennzeichnet, dass** die Temperatur, auf die abgekühlt wird ca. T = UCST + 5 °C bis T = UCST - 30°C beträgt.

6. Verfahren nach Anspruch 5, **dadurch gekennzeichnet, dass** der Temperaturbereich von T = UCST bis T = UCST - 10 °C beträgt.

7. Verfahren nach einem der Ansprüche 1 bis 6, **dadurch gekennzeichnet, dass** die Temperatur auf dem niedrigen Niveau solange gehalten wird, bis eine im wesentlichen vollständige Abscheidung des Polymeren auf der Substratoberfläche erhalten wird.

8. Verfahren nach einem der Ansprüche 1 bis 7, **dadurch gekennzeichnet, dass** nach dem Abscheiden die beschichtete Substratoberfläche mit einem Lösemittel für das Polymere bei einer Temperatur im Bereich von T = UCST - 10 °C für das Polymer in dem Lösemittel oder darunter gewaschen wird.

9. Verfahren nach einem der Ansprüche 1 bis 8, **dadurch gekennzeichnet, dass** das Substrat mit der Lösung nach erfolgter Abscheidung des Polymeren kurzzeitig auf eine Temperatur oberhalb der UCST gehalten wird und dann ein Trennen von Substrat und Lösung erfolgt.

10. Verfahren nach Anspruch 9, **dadurch gekennzeichnet, dass** die Temperatur bei der Temperaturerhöhung maximal 5 °C oberhalb der UCST liegt.

11. Verfahren nach einem der Ansprüche 1 bis 10, **dadurch gekennzeichnet, dass** das Polymere bei oder nach erfolgter Abscheidung auf der Substratoberfläche mittels Ankergruppen bzw. einer chemischen Reaktion immobilisiert wird.

12. Verfahren nach Anspruch 11, **dadurch gekennzeichnet, dass** die Oberfläche des Substrats nach der Immobilisierung des Polymeren gewaschen wird.

13. Verfahren nach Anspruch 11 oder 12, **dadurch gekennzeichnet, dass** die Immobilisierung durchgeführt wird, in dem ein mit olefinischen Gruppen (Doppelbindungen) modifiziertes Polymer abgeschieden wird und nachfolgend radikalisch immobilisiert wird.

14. Verfahren nach einem der Ansprüche 1 bis 13, **dadurch gekennzeichnet, dass** das Polymere vor der Ablagerung auf der Substratoberfläche modifiziert wird um den Benetzungswinkel der beschichteten Substratoberfläche gezielt zu beeinflussen.

15. Verfahren nach Anspruch 14, **dadurch gekennzeichnet, dass** die Modifizierung des Polymeren mittels unpolaren Alkylgruppen bzw. mit polaren Gruppen, insbesondere Hydroxyl- oder Amingruppen, oder ionischen Gruppen, insbesondere Carbonsäure oder Sulfonsäuregruppen, erfolgt.

16. Verfahren nach Anspruch 15, **dadurch gekennzeichnet, dass** das Polymere nach dessen Ablagerung auf der Substratoberfläche modifiziert und vernetzt wird.

17. Verfahren nach einem der Ansprüche 1 bis 16, **dadurch gekennzeichnet, dass** das Substrat ein partikelförmiges Substrat ist und dass das Polymere eine Molmasse von 1000 bis 50.000 g/mol aufweist.

18. Verfahren nach einem der Ansprüche 1 bis 16, **dadurch gekennzeichnet, dass** das Substrat ein flächiges Substrat ist und dass das Polymere eine Molmasse von 1000 bis 500.000 g/mol aufweist.

19. Verfahren nach Anspruch 17, **dadurch gekennzeichnet, dass** das partikelförmige Substrat ausgewählt ist aus Pigmenten, Füllstoffen, Fasern, Nanopartikeln und Partikeln aus kolloidalen oder micellaren Systemen.

20. Verfahren nach einem der Ansprüche 1 bis 19, **dadurch gekennzeichnet, dass** die Substratoberfläche mit einer Nanoschicht eines Polymeren beschichtet wird.

21. Verfahren nach einem der voranstehenden Ansprüche, **dadurch gekennzeichnet, dass** die UCST-Polymere so ausgewählt werden, dass deren UCST oberhalb der Einsatztemperatur des Substrats, vorzugsweise mindestens 10 °C, weiter bevorzugt mindestens 15 °C oberhalb der Raumtemperatur liegt.

22. Substrat mit einer Polymer beschichteten Oberfläche, hergestellt nach einem Verfahren gemäß einem der Ansprüche 1 bis 21.

23. Substrat nach Anspruch 22, **dadurch gekennzeichnet, dass** die Beschichtung eine Nanoschicht ist.

24. Substrat nach Anspruch 22 oder 23, **dadurch gekennzeichnet, dass** das Substrat ein metallisches Substrat ist.

25. Substrat nach Anspruch 24, **dadurch gekennzeichnet, dass** das Substrat aus Stahl, verzinktem Stahl, Aluminium oder einer Aluminiumlegierung hergestellt ist.

26. Substrat nach einem der Ansprüche 22 bis 25, **dadurch gekennzeichnet, dass** das Substrat ein partikelförmiges Substrat ist, ausgewählt aus Pigmenten, Füllstoffen, Fasern oder plättchenförmigen Partikeln, Nanopartikeln und Partikel aus kolloidalen oder micellaren Systemen.

## Claims

1. Method for treating surfaces of substrates, **characterised in that** the substrate is brought into contact with a solution of a polymer, the polymer having UCST properties and being deposited as a layer on the surface of the substrate by reducing the temperature of the polymer solution.

2. Method according to claim 1, **characterised in that** the polymer is selected from polystyrenes, polyvinyl alcohols, polyvinyl pyrazoles, polyethylene oxides, polyacrylic acids and derivatives thereof.

3. Method according to claim 1 or 2, **characterised in that** the solution comprises an organic solvent.

4. Method according to any one of claims 1 to 3, **characterised in that** the temperature of the solution on being brought into contact with the substrate surface is greater than the UCST temperature of the polymer in the solvent and **in that** the temperature of the solution is then reduced to a value within the UCST range or lower.

5. Method according to any one of claims 1 to 3, **characterised in that** the temperature to which the solution is cooled is about T = UCST + 5 °C to T = UCST - 30 °C.

6. Method according to claim 5, **characterised in that** the temperature range is from T = UCST to T = UCST - 10 °C.

7. Method according to any one of claims 1 to 6, **characterised in that** the temperature is kept at the low level until a substantially complete deposition of the polymer on the substrate surface has been obtained.

8. Method according to any one of claims 1 to 7, **characterised in that** after the deposition, the coated substrate surface is washed with a solvent for the polymer at a temperature in the range of T = UCST - 10°C for the polymer in the solvent or lower.

9. Method according to any one of claims 1 to 8, **characterised in that** after the deposition of the polymer, the substrate with the solution is briefly kept at a temperature above the UCST and a separation of the substrate and solution then is effected.

10. Method according to claim 9, **characterised in that** the temperature during the temperature increase is a maximum of 5 °C above the UCST.

11. Method according to any one of claims 1 to 10, **characterised in that** the polymer, during or following the deposition on the substrate surface, is immobilised by means of anchor groups or a chemical reaction.

12. Method according to claim 11, **characterised in that** the surface of the substrate is washed after the immobilisation of the polymer.

13. Method according to claim 11 or 12, **characterised in that** the immobilisation is carried out **in that** a polymer modified by olefinic groups (double bonds) is deposited and is then free-radically immobilised.

14. Method according to any one of claims 1 to 13, **characterised in that** the polymer is modified before deposition on the substrate surface in order to selectively influence the wetting angle of the coated substrate surface.

15. Method according to claim 14, **characterised in that** the modification of the polymer takes place by means of non-polar alkyl groups or with polar groups, in particular hydroxyl or amine groups, or ionic groups, in particular carboxylic acid or sulphonic acid groups.

16. Method according to claim 15, **characterised in that** the polymer is modified and crosslinked after its deposition on the substrate surface.

17. Method according to any one of claims 1 to 16, **characterised in that** the substrate is a particulate substrate and **in that** the polymer has a molar mass of 1,000 to 50,000 g/mol.

18. Method according to any one of claims 1 to 16, **characterised in that** the substrate is a flat substrate and **in that** the polymer has a molar mass of 1,000 to 500,000 g/mol.

19. Method according to claim 17, **characterised in that** the particulate substrate is selected from pigments, fillers, fibres, nano particles and particles of colloidal or micellar systems.

20. Method according to any one of claims 1 to 19, **characterised in that** the substrate surface is coated with a nano layer of a polymer.

21. Method according to any one of the preceding claims, **characterised in that** the UCST polymers are selected in such a way that their UCST is above the operating temperature of the substrate, preferably at least 10 °C, more preferably at least 15 °C, above room temperature.

22. Substrate with a polymer-coated surface, produced by a method according to any one of claims 1 to 21.

23. Substrate according to claim 22, **characterised in that** the coating is a nano layer.

24. Substrate according to claim 22 or 23, **characterised in that** the substrate is a metallic substrate.

25. Substrate according to claim 24, **characterised in that** the substrate is produced from steel, galvanised steel, aluminium or an aluminium alloy.

26. Substrate according to any one of claims 22 to 25, **characterised in that** the substrate is a particulate substrate selected from pigments, fillers, fibres or lamellar particles, nano particles and particles made of colloidal or micellar systems.

## Revendications

1. Procédé de traitement de surfaces de substrats, **caractérisé en ce que** le substrat est mis en contact avec une solution d'un polymère, le polymère présentant des propriétés d'UCST et étant déposé en une couche par abaissement de la température de la solution de polymère sur la surface du substrat.

2. Procédé selon la revendication 1, **caractérisé en ce que** le polymère est choisi parmi les polystyrènes, les alcools polyvinyliques, les polyvinylpyrazoles, les oxydes de polyéthylène, les acides polyacryliques et leurs dérivés.

3. Procédé selon la revendication 1 ou 2, **caractérisé en ce que** la solution comprend un solvant organique.

4. Procédé selon l'une des revendications 1 à 3, **caractérisé en ce que** la température de la solution lors de la mise en contact avec la surface de substrat est supérieure à la température UCST du polymère dans le solvant et **en ce que** la température de la solution est ensuite abaissée à une valeur dans le domaine de l'UCST ou inférieure.

5. Procédé selon l'une des revendications 1 à 3, **caractérisé en ce que** la température à laquelle le refroidissement s'effectue est d'environ T = UCST + 5°C à T = UCST -30°C.

6. Procédé selon la revendication 5, **caractérisé en ce que** la plage de températures est de T = UCST à T = UCST - 10°C.

7. Procédé selon l'une des revendications 1 à 6, **caractérisé en ce que** la température est maintenue au niveau bas jusqu'à ce que l'on obtienne un dépôt substantiellement complet du polymère sur la surface du substrat.

8. Procédé selon l'une des revendications 1 à 7, **caractérisé en ce que**, après le dépôt, la surface de substrat revêtue est lavée avec un solvant du polymère à une température dans un domaine de T = UCST -10°C pour le polymère dans le solvant ou une température inférieure.

9. Procédé selon l'une des revendications 1 à 8, **caractérisé en ce que** le substrat avec la solution est maintenu brièvement à une température supérieure à l'UCST après que le dépôt de polymère est réalisé et ensuite est effectuée une séparation du substrat et de la solution.

10. Procédé selon la revendication 9, **caractérisé en ce que** la température lors de l'augmentation de température est au maximum de 5°C supérieure à l'UCST.

11. Procédé selon l'une des revendications 1 à 10, **caractérisé en ce que** le polymère est immobilisé lors du dépôt ou après que le dépôt est réalisé sur la surface du substrat au moyen de groupes d'ancrage ou d'une réaction chimique.

12. Procédé selon la revendication 11, **caractérisé en ce que** la surface du substrat est lavée après l'immobilisation du polymère.

13. Procédé selon la revendication 11 ou 12, **caractérisé en ce que** l'immobilisation est réalisée en déposant un polymère modifié avec des groupes oléfiniques (doubles liaisons) et en l'immobilisant ensuite de façon radicalaire.

14. Procédé selon l'une des revendications 1 à 13, **caractérisé en ce que** le polymère est modifié avant le dépôt sur la surface du substrat pour influer de façon ciblée sur l'angle de mouillage de la surface de substrat revêtue.

15. Procédé selon la revendication 14, **caractérisé en ce que** la modification du polymère s'effectue au moyen de groupes alkyle non polaires ou avec des groupes polaires, en particulier des groupes hydroxyle ou amine, ou des groupes ioniques, en particulier des groupes acide carboxylique ou acide sulfonique.

16. Procédé selon la revendication 15, **caractérisé en ce que** le polymère est modifié et réticulé après son dépôt sur la surface de substrat.

17. Procédé selon l'une des revendications 1 à 16, **caractérisé en ce que** le substrat est un substrat particulaire et **en ce que** le polymère présente une masse molaire de 1000 à 50 000 g/mole.

18. Procédé selon l'une des revendications 1 à 16, **caractérisé en ce que** le substrat est un substrat plan et **en ce que** le polymère présente une masse molaire de 1000 à 500 000 g/mole.

19. Procédé selon la revendication 17, **caractérisé en ce que** le substrat particulaire est choisi parmi les pigments, les agents de charge, les fibres, les nanoparticules et les particules de systèmes colloïdaux ou micellaires.

20. Procédé selon l'une des revendications 1 à 19, **caractérisé en ce que** la surface du substrat est revêtue d'une nanocouche d'un polymère.

21. Procédé selon l'une des revendications précédentes, **caractérisé en ce que** les polymères UCST sont choisis de telle sorte que leur UCST soit supérieure à la température d'utilisation du substrat, de préférence d'au moins 10°C, de manière davantage préférée d'au moins 15°C supérieure à la température ambiante.

22. Substrat avec une surface revêtue de polymère, fabriqué selon un procédé selon l'une des revendications 1 à 21.

23. Substrat selon la revendication 22, **caractérisé en ce que** le revêtement est une nanocouche.

24. Substrat selon la revendication 22 ou 23, **caractérisé en ce que** le substrat est un substrat métallique.

25. Substrat selon la revendication 24, caractérisé en ce le substrat est fabriqué à partir d'acier, d'acier zingué, d'aluminium ou d'un alliage d'aluminium.

26. Substrat selon l'une des revendications 22 à 25, **caractérisé en ce que** le substrat est un substrat particulaire choisi parmi les pigments, les agents de charge, les fibres ou les particules plaquettaires, les nanoparticules et les particules de systèmes colloïdaux ou micellaires.
